# EUROPÄISCHE PATENTSCHRIFT

(11) **EP 2 601 445 B1**
(45) Veröffentlichungstag und Bekanntmachung des Hinweises auf die Patenterteilung: **07.09.2016**
(21) Anmeldenummer: 11738192.1
(22) Anmeldetag: 19.07.2011
(51) Int. Cl.: F23N 1/00

(54) **GASVENTILEINHEIT**
GAS VALVE UNIT
GROUPE DE VALVES À GAZ

(30) Priorität: 06.08.2010 DE 102010039010
(43) Veröffentlichungstag der Anmeldung: 12.06.2013
(73) Patentinhaber: BSH Hausgeräte GmbH, 81739 München (DE)
(72) Erfinder: NAUMANN, Jörn, 77770 Durbach (DE)
(86) Internationale Anmeldenummer: PCT/EP2011/062349
(87) Internationale Veröffentlichungsnummer: WO 2012/016822

(56) Entgegenhaltungen:
- WO-A1-99/11956
- WO-A2-2011/144492
- DE-A1- 10 249 936
- DE-C- 885 187
- US-A1- 2008 191 155

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit mindestens zwei Auf-Zu-Ventile aufweist.

Gasventileinheiten der genannten Art sind beispielweise in den Druckschriften EP0818655A2 und WO2004063629 A1 beschrieben. Mit derartigen Gasventileinheiten kann der einen Gasbrenner eines Gaskochgeräts zugeführte Gasvolumenstrom in mehreren Stufen gesteuert werden. Dabei besitzt der Gasvolumenstrom in jeder Stufe eine reproduzierbare Größe. Der Durchflussquerschnitt der Gasventileinheit insgesamt und folglich die Größe des Gasvolumenstroms werden eingestellt, indem bestimmte AufZu-Ventile der Gasventileinheit geöffnet bzw. geschlossen werden und dadurch der Gasfluss durch bestimmte Drosselöffnungen freigegeben bzw. unterbrochen wird.

Bei den bekannten gattungsmäßigen Gasventileinheiten werden die Auf-Zu-Ventile einzeln elektromagnetisch betätigt. Hierzu ist jedem der Auf-Zu-Ventile ein eigener Elektromagnet zugeordnet, der das Auf-Zu-Ventil öffnet bzw. schließt. Die Ansteuerung der Elektromagnete erfolgt durch eine elektronische Steuereinheit. Diese elektronische Steuereinheit verarbeitet die von einer Bedienperson des Gaskochgeräts mittels eines elektrischen Bedienelements erzeugten Signale und steuert die Elektromagnete der Auf-Zu-Ventile entsprechend an.

Die WO 99/11956 A1 beschreibt eine Gasventileinheit mit mehreren Auf-Zu-Ventilen, die mechanisch mit einem linear verschieblichen Schieber gekoppelt sind. Durch Verlagern des Schiebers sind die Auf-Zu-Ventile additiv zuschaltbar.

Die DE 102 49 936 A1 beschreibt eine Ventilanordnung für die Mikrosystemtechnik. Die Ventilanordnung weist mehrere Auf-Zu-Ventile auf. Die Auf-Zu-Ventile sind mit Hilfe von Permanentmagneten ansteuerbar.

Die WO 2011/144492 A2 beschreibt eine Gasventileinheit mit zwei Gasausgängen und gehört gemäß Art. 54(3) EPU zum Stand der Technik. Die Gasventileinheit umfasst einen magnetischen Körper zum Öffnen von Auf-Zu-Ventilen der Gasventileinheit.

Der vorliegenden Erfindung liegt die Aufgabe zugrunde, eine einfacher gestaltete Gasventileinheit der eingangs genannten Art zur Verfügung zu stellen.

Diese Aufgabe wird erfindungsgemäß dadurch gelöst, dass die Auf-Zu-Ventile durch Bewegen einer einzigen Magnetplatte, relativ zu den Auf-Zu-Ventilen additiv oder sukzessive zuschaltbar sind, wobei eine Mehrzahl N von Auf-Zu-Ventilen vorgesehen ist, wobei jedes Auf-Zu-Ventil einen bewegbare Absperrkörper aufweist, der bei geschlossenem Auf-Zu-Ventil an einem Ventilsitz anliegt und dadurch eine Öffnung in dem Ventilsitz verschließt und wobei die zweite bis n-te Öffnungen einen der Reihe nach zunehmenden Öffnungsquerschnitt aufweisen..

In der bevorzugten Ausführungsform ist die Magnetplatte von zumindest einem Permanentmagneten gebildet, welcher relativ zu den Auf-Zu-Ventilen bewegbar ist. Insbesondere wird die Magnetplatte über die Auf-Zu-Ventile geführt, wobei die Magnetplatte so ausgebildet ist, dass die Auf-Zu-Ventile nacheinander aufmachen und ein geöffnetes Auf-Zu-Ventil dann auch offen bleibt.

Gemäß eines Beispiels, welches nicht Teil der Erfindung ist, ist es möglich, als Magnetplatte einen selbst nicht-magnetischen Körper aus ferromagnetischem Material vorzusehen. Permanentmagnete sind dann im jeweiligen Bereich der Auf-Zu-Ventile vorgesehen.

Die Betätigung der Gasventileinheit erfolgt, indem die Lage oder die räumliche Ausrichtung der Magnetplatte, insbesondere der Permanentmagneten, relativ zu den zu betätigenden Auf-Zu-Ventilen verändert wird: Im Folgenden steht der Begriff "Permanentmagnet" stellvertretend auch für andere magnetisch wirksame Körper. Wenn die Bewegung der Permanentmagneten durch eine Bedienperson von Hand erfolgt, sind zum Schalten der Auf-Zu-Ventile keine elektrischen Komponenten erforderlich. Alternativ können die Permanentmagneten auch mittels eines beliebigen Stellglieds, beispielsweise eines Elektromotors, bewegt werden. Der Elektromotor wird dabei von einer elektrischen Steuereinheit angesteuert. Diese ermöglicht, es, dieselbe Gasventileinheit wahlweise mechanisch durch die Bedienperson oder mittels eines elektrischen Stellglieds zu betätigen. Bei der Herstellung von Kochgeräten können baugleiche Gasventileinheiten sowie mit mechanischen Benutzerschnittstellen, beispielsweise Drehknebeln, als auch mit elektrischen Benutzerschnittstellen, beispielsweise Touch-Sensoren, kombiniert werden.

Die Gasventileinheit ist insbesondere Teil eines handbetätigten Mehrfachstellgeräts, welches aus einem Ventilteil und einer adaptierten Zündsicherung besteht. In dem Ventilteil sind insbesondere ein Griff oder Drehknebel, Permanentmagnete, Ventile, Düsen und Dichtungen integriert. Der Griff kann durch leichten Druck eingedrückt werden. Hierbei wird die Zündsicherung betätigt. Die Auf-Zu-Ventile oder Ferritventile werden in einem oder mehreren gasdichten Räumen durch ein bzw. mehrere federnde Bauteile auf Dichtungen gedrückt und verhindern somit den Durchfluss zu den dazugehörenden Öffnungen oder Dichtungsöffnungen. Die federnden Bauteile oder Federn finden ihren Gegenhalt in einem gasdicht angebrachten Deckel.

Zwischen der Unterseite des Deckels und der Oberkante der Auf-Zu-Ventile ist ein kleiner Spalt im geschlossenen Zustand der Ventile. Oberhalb des Deckels werden die Permanentmagnete positioniert, wobei die Anordnungsabstände von den Auf-Zu-Ventilen und von den Permanentmagneten bevorzugt gleich sind. Die Permanentmagnete werden vom Griff insbesondere mittels eines drehbaren Bauteils verschoben, so dass dadurch eine Ventilbeeinflussung erfolgt.

In einer bevorzugten Ausführungsform sind die vorzugsweise als Permanentmagnet ausgeführte Magnetplatte und die Auf-Zu-Ventile derart ausgeführt, dass in Abhängigkeit von der Position der Magnetplatte eine bestimmte Anzahl von Auf-Zu-Ventilen geöffnet ist.

Bevorzugt ist die Magnetplatte in Abhängigkeit eines Winkels eines drehbaren Bauteils über den in einer Reihe angeordneten Auf-Zu-Ventilen angeordnet. Je größer der Winkel des drehbaren Bauteils ist, desto mehr Auf-Zu-Ventile werden von der Magnetplatte geöffnet.

Die Magnetplatte ist dann dazu eingerichtet, die Anzahl der Auf-Zu-Ventile additiv zuzuschatten, um die Gasmenge stetig zu steigern.

Eine Mehrzahl N von Auf-Zu-Ventilen ist vorgesehen, wobei jedes Auf-Zu-Ventil einen bewegbaren Absperrkörper aufweist, der bei geschlossenem Auf-Zu-Ventil an einem Ventilsitz anliegt und dadurch eine Öffnung oder Ventilöffnung im Ventilsitz verschließt. Insbesondere haben die Öffnungen unterschiedliche Durchmesser. Die zweite bis n-te Öffnung haben ansteigende Durchmesser. Somit kann die zugeschaltete Zusatzlast je nach Drehwinkel vergrößert werden.

Wie oben bereits ausgeführt, weist jedes Auf-Zu-Ventil einen bewegbaren Absperrkörper auf, welcher bei geschlossenem Auf-Zu-Ventil an einem Ventilsitz anliegt und dadurch eine Öffnung im Ventilsitz verschließt. Bei geöffnetem Auf-Zu-Ventil wird die Öffnung im Ventilsitz von Gas durchströmt. Dieser Gasfluss wird unterbrochen, wenn der Absperrkörper des jeweiligen Auf-Zu-Ventils an dem Ventilsitz anliegt.

Vorzugsweise ist der Ventilsitz als im Wesentlichen ebene Fläche ausgeführt. Die ebene Fläche des Ventilsitzes bildet die Dichtfläche gegenüber dem jeweiligen Absperrkörper. Der in diesem Fall mit einer erhabenen Dichtkante ausgeführt ist. Zur Herstellung des Ventilsitzes an sich sind damit keine mechanischen Bearbeitungsschritte erforderlich, wenn zur Herstellung des Ventilsitzes ein Plattenmaterial verwendet wird. In die ebene Fläche müssen dann nur die Öffnungen eingearbeitet werden. Alternativ kann der Ventilsitz als Formdichtung ausgebildet sein, wobei der Absperrkörper dann an seiner Dichtfläche plan ausgebildet ist. Der Vorteil dieser Variante ist, dass die Gefahr einer Beschädigung der Dichtkante am Absperrkörper verringert ist.

Mit besonderem Vorteil sind die Ventilsitze der mindestens zwei Auf-Zu-Ventile von einem gemeinsamen Bauteil gebildet. Dieses gemeinsame Bauteil kann als Ventildichtplatte ausgeführt sein und besitzt für jedes Auf-Zu-Ventil eine Öffnung oder Ventilöffnung und einen der Öffnung zugeordneten Ventilsitz. Insbesondere weist jedes Auf-Zu-Ventil eine Feder auf, die bei geschlossenem Auf-Zu-Ventil den Absperrkörper auf den Ventilsitz drückt. Die Feder erzeugt somit die Schließkraft des Auf-Zu-Ventils. Die Feder stellt damit sicher, dass unabhängig von der Einbauläge der Gasventileinheit, z.B. auch dann, wenn eine Gewichtskraft des Absperrkörpers der Kraft der Feder entgegenwirkt, das Auf-Zu-Ventil sicher schließt.

Zum Öffnen des Auf-Zu-Ventils ist der Absperrkörper mittels der Kraft des Permanentmagneten entgegen der Kraft der Feder von dem Ventilsitz abhebbar. Jedes Auf-Zu-Ventil kann somit mittels zumindest eines Permanentmagneten aktiv geöffnet werden. Der Absperrkörper ist aus einem ferromagnetischen Material ausgebildet und wird zum Öffnen eines Auf-Zu-Ventils von dem entsprechenden Permanentmagneten angezogen. Wenn der jeweilige Permanentmagnet von dem Absperrkörper wegbewegt wird oder wenn der Permanentmagnet vollständig von der Gasventileinheit entfernt wird, schließt jedes einzelne Auf-Zu-Ventil in Folge der Kraft der Feder, welche den Absperrkörper auf den Ventilsitz drückt, automatisch.

Gemäß eines Beispiels, welches nicht Teil der Erfindung ist, ist es möglich, den Absperrkörper des Auf-Zu-Ventils als Permanentmagnet auszuführen. Die Betätigung kann dadurch erfolgen, dass ein nicht-magnetischer ferromagnetischer Körper relativ zu dem Absperrkörper bewegt wird. Alternativ können auch sowohl der Absperrkörper als auch der relativ zu dem Absperrkörper bewegbare Körper als Permanentmagnet ausgeführt sein. In diesem Fall kann wahlweise die Anziehungskraft oder die Abstoßkraft der Permanentmagnete zur Betätigung der Auf-Zu-Ventile genutzt werden.

Bevorzugt ist jeder Absperrkörper von einem im Wesentlichen zylindrischen Stößel gebildet. Der Absperrkörper weist an seinem dem Ventilsitz zugewandten Ende vorzugsweise eine ringförmige Dichtkante auf.

Jeder Absperrkörper ist in einem Ventilkörper der Gasventileinheit axial bewegbar geführt.

Eine besonders günstige Anordnung ist gegeben, wenn die Absperrkörper der einzelnen Auf-Zu-Ventile auf einer Kreisbahn um eine Achse der Gasventileinheit angeordnet sind und die Absperrkörper parallel zu dieser Achse bewegbar sind. Es entsteht hierdurch eine ringförmige Anordnung, bei der auch die Öffnungen der Ventildichtplatte auf einer Kreisbahn angeordnet sind. Die Bewegung der Absperrkörper erfolgt senkrecht zu der Ebene der Ventildichtplatte.

Zur Betätigung des jeweiligen Auf-Zu-Ventils ist die Position der Permanentmagneten relativ zu dem Absperrkörper des jeweiligen Auf-Zu-Ventils veränderbar. Der Absperrkörper wird von dem jeweiligen Permanentmagneten dann angezogen, wenn sich der Absperrkörper direkt unterhalb des jeweiligen Permanentmagneten befindet. Andernfalls ist das Auf-Zu-Ventil mittels der auf den Absperrkörper wirkenden Kraft der Feder geschlossen.

Eine besonders zweckmäßige Ausgestaltung der Erfindung sieht vor, dass die vorzugsweise als Permanentmagneten gebildeten magnetisch wirksamen Körper an einem um die Achse der Gasventileinheit drehbaren Bauteil der Gasventileinheit angeordnet sind, wobei die Achse vorzugsweise von einer Schaltwelle der Gasventileinheit gebildet ist. Bei einem Drehen des drehbaren Bauteils werden die Permanentmagneten auf einer Kreisbahn bewegt. Der Durchmesser der Kreisbahn entspricht im Wesentlichen dem Durchmesser der Kreisbahn, in der sich die Absperrkörper befinden. Dies bedeutet, dass bei einem Drehen des drehbaren Bauteils der erste Permanentmagnet über die Absperrkörper aller Auf-Zu-Ventile bewegt werden kann.

Eine besonders einfache Anordnung sieht vor, dass das drehbare Bauteil durch eine Bedienperson von Hand um die Achse drehbar ist. Dann sind keinerlei elektrische oder elektronische Bauteile erforderlich. Die Betätigung der Gasventileinheit erfolgt ausschließlich durch die manuelle Kraft der Bedienperson, welche die Permanentmagneten relativ zu den Absperrkörpern der Auf-Zu-Ventile bewegen kann.

Ebenfalls ist es möglich, dass das drehbare Bauteil mittels eines elektrischen Stellglieds um die Achse drehbar ist. Für das elektrische Stellglied kommt insbesondere ein Elektromotor, beispielsweise ein Schrittmotor, zum Einsatz. Das Stellglied wird dabei von einer elektrischen Steuereinheit angesteuert, beispielsweise in Abhängigkeit von den Signalen einer elektrischen Benutzerschnittstelle oder in Abhängigkeit von automatisierten Funktionen, beispielsweise einer automatisierten Leistungsregulierung oder einer Abschaltautomatik.

Weitere Vorteile und Einzelheiten der Erfindung werden anhand der in den schematischen Figuren dargestellten Ausführungsbeispiele näher erläutert. Dabei zeigt:
- Fig. 1: eine schematische Schaltanordnung der Gasventileinheit mit geschlossenen Auf-Zu-Ventilen,
- Fig. 2: eine schematische Schaltanordnung der Gasventileinheit mit einem geöffneten Auf-Zu-Ventil,
- Fig. 3: eine schematische Schaltanordnung der Gasventileinheit mit zwei geöffneten Auf-Zu-Ventilen,
- Fig. 4: eine schematische Schaltanordnung der Gasventileinheit mit vier geöffneten Auf-Zu-Ventilen, und
- Fig. 5: eine schematische Schaltanordnung der Gasventileinheit mit fünf geöffneten Auf-Zu-Ventilen.

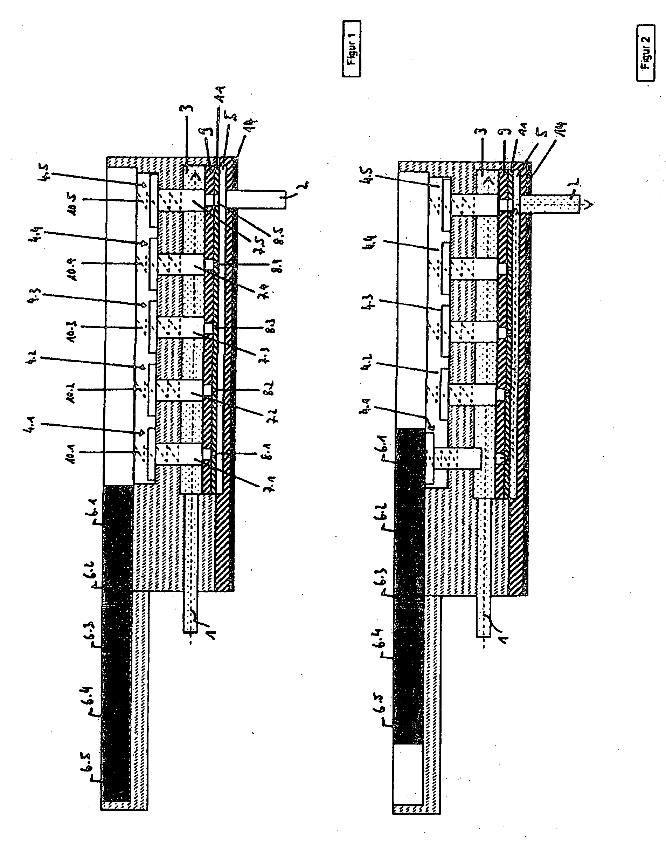

Die Fig. 1 bis 5 zeigen die Schaltanordnung der erfindungsgemäßen Gasventileinheit in aufeinanderfolgenden Schaltzuständen. Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck, von beispielsweise 20 mbar oder 50 mbar, an. An einem Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 3 der Gasventileinheit mit der Eingangsseite der im vorliegenden Ausführungsbeispiel fünf Auf-Zu-Ventilen 4 (4.1 bis 4.5) verbunden. Durch Öffnen der Auf-Zu-Ventile 4 ist der Gaseingang 1 mit einem Gasausgangsraum 5 verbunden. Zwischen dem Gaseingangsraum 2 und dem Gasausgangsraum 5 ist eine Dichtplatte oder Ventildichtplatte 9 angeordnet.

Die Auf-Zu-Ventile 4 sind durch Bewegen von fünf Permanentmagneten 6 (6.1 bis 6.5) relativ zu den Auf-Zu-Ventilen 4 betätigbar.

Dabei sind die Permanentmagneten 6.1 bis 6.5 und die Auf-Zu-Ventile 4.1 bis 4.5 derart ausgeführt, dass in Abhängigkeit von den Positionen der Permanentmagnete 6.1 bis 6.5 die Auf-Zu-Ventile 4.1 bis 4.5 addiditiv geöffnet werden.

Hierzu ist im jeweiligen Auf-Zu-Ventil 4.1 bis 4.5 eine Öffnung 8.1 bis 8.5 in einer Düsenplatte 11 zugeordnet. Bei geöffnetem Auf-Zu-Ventil 4.1 bis 4.5 kann Gas von dem Gaseingangsraum 3 zu dem Gasausgangsraum 5 gelangen.

Die Ventilsitze der Auf-Zu-Ventile 4.1 bis 4.5 sind vorzugsweise von einem gemeinsamen Bauteil gebildet. Dieses gemeinsame Bauteil ist beispielsweise die Ventildichtplatte 9.

Jedes Auf-Zu-Ventil 4.1 bis 4.5 hat eine Feder 10.1 bis 10.5, welche bei geschlossenem Auf-Zu-Ventil 4.1 bis 4.5 einen Absperrkörper 7 (7.1-7.5) auf den Ventilsitz drückt. Der bewegbare Absperrkörper 7 liegt bei geschlossenem Auf-Zu-Ventil 4 an dem Ventilsitz an und verschließt dadurch die Öffnung 8 im Ventilsitz.

Zum Öffnen des Auf-Zu-Ventils 4 hebt der Absperrkörper 7 mittels der Kraft des Permanentmagneten 6 entgegen der Kraft der Feder von dem Ventilsitz ab. Der Absperrkörper 7 ist beispielsweise von einem im Wesentlichen zylindrischen Stößel gebildet.

Die Absperrkörper 7.1 bis 7.5 der Auf-Zu-Ventile 4.1 bis 4.5 sind auf einer Kreisbahn um eine Achse der Gasventileinheit angeordnet. Die Absperrkörper 7 sind parallel zu dieser Achse bewegbar.

Zur Betätigung der Auf-Zu-Ventile 4.1 bis 4.5 sind die Positionen der Permanentmagneten 6.1 bis 6.5 relativ zu den Absperrkörpern 7.1 bis 7.5 der Auf-Zu-Ventile 4.1 bis 4.5 veränderbar. Insbesondere sind dabei die Permanentmagneten 6.1 bis 6.5 in Abhängigkeit eines Winkels eines drehbaren Bauteils über dem in einer Reihe angeordneten Auf-Zu-Ventil 4.1 bis 4.5 angeordnet.

In der Schaltstellung gemäß Fig. 1 ist keines der Auf-Zu-Ventile 4.1 bis 4.5 geöffnet. Somit kann kein Gas von dem Gaseingangsraum 3 zu dem Gasausgangsraum 5 strömen. Alle Auf-Zu-Ventile 4.1 bis 4.5 dichten auf der Dichtplatte 9 ab.

Wenn die Permanentmagnete 6.1 bis 6.5 aus der Nullposition verschoben werden, nähern sie sich dem ersten Auf-Zu-Ventil 4.1 an und bewirken dort durch die Anziehungskraft des ersten Permanentmagneten 6.1, dass das erste Auf-Zu-Ventil 4.1 gegen den Deckel 12 gezogen wird. Folglich öffnet das erste Auf-Zu-Ventil 4.1. Damit ist der erste Permanentmagnet 6.1 bei einem ersten Winkel des drehbaren Bauteils, der die Verschiebung der Permanentmagnete 6.1, 6.2 bewirkt, über dem ersten Auf-Zu-Ventil 4.1 der Reihe der Auf-Zu-Ventile 4.1 bis 4.5 angeordnet. Die weiteren Permanentmagneten 6.2 bis 6.5 sind hingegen über keinem der Auf-Zu-Ventile 4.1 bis 4.5 angeordnet und leisten damit keine Öffnungsfunktion.

Durch die Öffnung des ersten Auf-Zu-Ventils 4.1 kann Gas durch die Öffnung in der Dichtplatte 9 und dann durch die Öffnung 8.1 in der darunterliegenden Düsenplatte 11 strömen. Die Düsenplatte 11 fungiert insbesondere als Gegenlager für die Auf-Zu-Ventile 4.1 bis 4.5.

In der Schaltstellung gemäß der Fig. 2 strömt die kleinste mögliche Menge an Gas, die so genannte Grundlast, von dem Gaseingangsraum 3 in den Gasausgangsraum 5.

Wenn das Gas die Öffnung in der Düsenplatte 11 durchströmt hat, kommt es in den Gasausgangsraum 5 und strömt weiter zum Gasausgang 3.

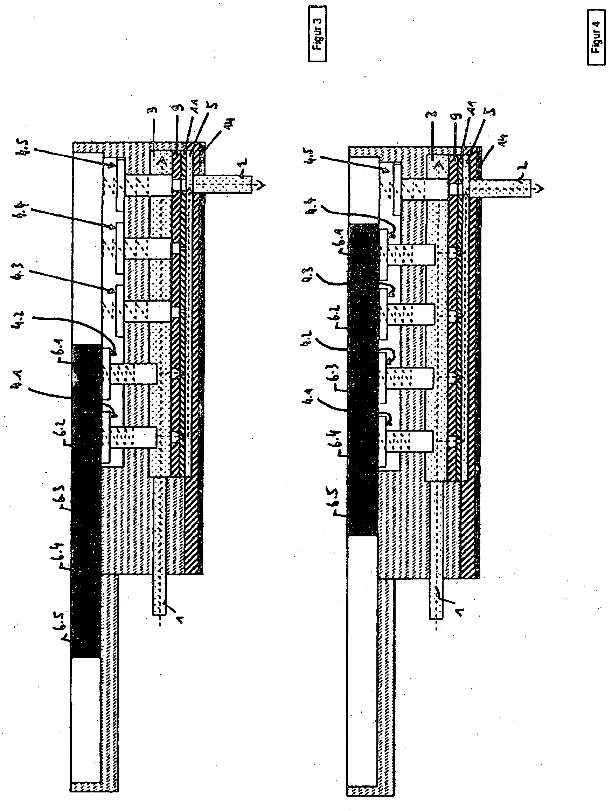

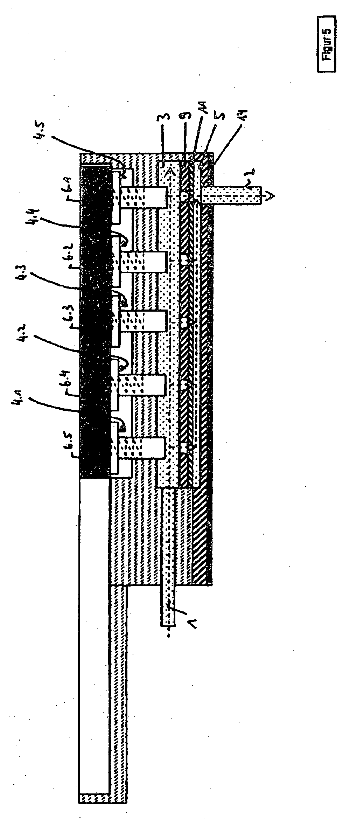

Mit Bezug zu Fig. 3 werden die Permanentmagnete 6.1 bis 6.5 weiter in Richtung des zweiten Auf-Zu-Ventils 4.2 geschoben, bis der erste Permanentmagnet 6.1 direkt über dem zweiten Auf-Zu-Ventil 4.2 steht und dieses dadurch geöffnet wird. Bei diesem Vorgang bleibt das erste Auf-Zu-Ventil 4.1 durch den zweiten Permanentmagneten 6.2 geöffnet. In allen folgenden Schaltzuständen der Fig. 4 und 5 bleibt das erste Auf-Zu-Ventil 4.1 stets geöffnet.

In der Schaltstellung der Fig. 3 strömt durch das erste Auf-Zu-Ventil 4.1 die Grundlastmenge. Eine weitere Gasmenge strömt durch die zuschaltbare Öffnung 8.2 des Auf-Zu-Ventils 4.2 und dann weiter in den Gasausgangsraum 5, wo es mit der Grundlastmenge eine gemeinsame Menge bildet, die dann weiter zum Gasausgang 3 strömt. Beispielsweise bildet die Grundlastmenge 300 W und die zugeschaltete Gasmenge 100 W ab.

Mit Bezug zu Fig. 4 werden die Permanentmagnete 6.1 bis 6.5 weiter in Richtung des dritten Auf-Zu-Ventils 4.3 und des vierten Auf-Zu-Ventils 4.4 geschoben, bis der erste Permanentmagnet 6.1 direkt über dem vierten Auf-Zu-Ventil 4.4 steht und dieses dadurch öffnet. Bei diesem Vorgang bleiben die bereits geöffneten Auf-Zu-Ventile 4.1, 4.2 und 4.3 geöffnet.

In der Schaltstellung der Fig. 4 strömt durch das erste Auf-Zu-Ventil 4.1 die Grundlastmenge. Weitere Gasmengen strömen durch die zuschaltbaren Öffnungen 8.2, 8.3 und 8.4 von den Auf-Zu-Ventilen 4.2, 4.3 und 4.4 in den Gasausgangsraum 5 und dann weiter zum Gasausgang 2.

Mit Bezug zu Fig. 5 werden die Permanentmagnete 6.1 bis 6.5 weiter in Richtung des fünften Auf-Zu-Ventils 4.5 geschoben, bis der erste Permanentmagnet 6.1 direkt über dem fünften Auf-Zu-Ventil 4.5 steht und dieses dadurch geöffnet ist. Bei diesem Vorgang bleiben die bereits geöffneten Auf-Zu-Ventile 4.1, 4.2, 4.3 und 4.4 geöffnet.

In dieser Schaltstellung der Fig. 5 strömt durch das erste Auf-Zu-Ventil die Grundlastmenge. Weitere Gasmengen strömen durch die zuschaltbaren Öffnungen 8.2 bis 8.5 von den Auf-Zu-Ventilen 4.2 bis 4.5 in den Gasausgangsraum 5.

Die obigen Schaltstufen der Auf-Zu-Ventile 4.1 bis 4.5 können gleichmäßig gestuft sein oder auch einen progressiven Verlauf aufweisen.

Über die fünfte Schaltstufe, das heißt das fünfte Auf-Zu-Ventil 4.5, kann eine extrem große Öffnung zugeschaltet werden, damit sichergestellt wird, dass die maximal mögliche Durchflussmenge ungedrosselt durch die Armatur fließt.

Bei der additiven Schaltanordnung gemäß obiger Fig. 1 bis 5 ist eine weitgehende räumliche Unabhängigkeit der Ventilabstände zueinander erreicht, weil mit Hilfe der variablen Magnetfläche der Permanentmagnete 6.1 bis 6.5 unterschiedliche Ventilabstände überbrückt werden können, ohne dass es zu einem nicht erwünschten Abbruch des Gasflusses kommen könnte.

Bei diesem Wirkprinzip können die Ventile auch doppelreihig oder mehrreihig oder auch versetzt zueinander angeordnet werden, wbbei die Griffbetätigungselemente andere Abstände zur Außenkontur erhalten können.

Die obigen Schaltzustände gemäß der Fig. 1 bis 5 sind vorteilhafterweise exakt reproduzierbar. Ferner ist auch der Aufbau der Auf-Zu-Ventile ab der Dichtplatte in Strömungsrichtung gesehen sehr einfach, da eine Doppellochung der Düsenplatte und weitere Gasverteilungsplatten entfallen können. Die magnetische Justierung mittels der zwei Permanentmagneten wirkt für die Bedienperson wie Rasten. Somit hat die Bedienperson ein haptisches Feedback. Des Weiteren ist die Haptik auch leicht gleitend aufgrund des Einsatzes der Permanentmagneten. Folglich ist auch bei den Schaltvorgängen der Auf-Zu-Ventile kein Fett erforderlich, so dass es zu keiner Verschiebung der Schaltpunkte kommen kann. Auch gibt es keinen reibenden Verlust an den Auf-Zu-Ventilen wie bei einem herkömmlichen Ventil mit Konus und Gehäuse. Durch die erfindungsgemäße Anordnung ist ein Drehweg von ca. 320° bereitgestellt. Der Ventilblock kann als Ring oder auch als Schieber ausgebildet sein. Die vorliegende Gasventileinheit ist für jede Gasart, auch für Flüssiggas, einsetzbar.

### Bezugszeichenliste

- 1: Gaseingang
- 2: Gasausgang
- 3: Gaseingangsraum
- 4: Auf-Zu-Ventil
- 5: Gasausgangsraum
- 6: Permanentmagnet
- 7: Absperrkörper
- 8: Öffnung
- 9: Ventildichtplatte
- 10: Feder
- 11: Düsenplatte
- 12: Deckel
- 13: Gehäuse
- 14: Bodenplatte

## Patentansprüche

1. Gasventileinheit zum Einstellen eines einem Gasbrenner eines Gasgerätes, insbesondere eines Gaskochgerätes, zugeführten Gasvolumenströms, wobei die Gasventileinheit eine Anzahl von Auf-Zu-Ventilen (4) und eine einzige Magnetplatte aufweist, wobei die Anzahl der Auf-Zu-Ventile (4) durch Bewegen der einzigen Magnetplatte relativ zu den Auf-Zu-Ventilen (4) additiv zuschaltbar ist, wobei eine Mehrzahl N von Auf-Zu-Ventilen (4) vorgesehen ist, wobei jedes Auf-Zu-Ventil (4) einen bewegbaren Absperrkörper (7) aufweist, der bei geschlossenem Auf-Zu-Ventil (4) an einem Ventilsitz anliegt und dadurch eine Öffnung (8) in dem Ventilsitz verschließt und wobei die zweite bis n-te Öffnungen einen der Reihe nach zunehmenden Öffnungsquerschnitt aufweisen.

2. Gasventileinheit nach Anspruch 1, **dadurch gekennzeichnet, dass** die vorzugsweise als Permanentmagnet (6) ausgeführte Magnetplatte und die Auf-Zu-Ventile (4) derart ausgeführt sind, dass in Abhängigkeit von der Position der Magnetplatte eine bestimmte Anzahl der Auf-Zu-Ventile geöffnet ist.

3. Gasventileinheit nach Anspruch 2, **dadurch gekennzeichnet, dass** der Permanentmagnet (6) in Abhängigkeit eines Winkels eines drehbaren Bauteils über den in einer Reihe angeordneten Auf-Zu-Ventilen (4) angeordnet ist.

4. Gasventileinheit nach einem der Ansprüche 1 bis 3, **dadurch gekennzeichnet, dass** die Ventilsitze der Auf-Zu-Ventile (4) von einem gemeinsamen Bauteil gebildet sind, welches vorzugsweise von einer Ventildichtplatte (9) gebildet ist.

5. Gasventileinheit nach einem der Ansprüche 1 bis 4, **dadurch gekennzeichnet, dass** jedes Auf-Zu-Ventil (4) eine Feder (10) aufweist, die bei geschlossenem Auf-Zu-Ventil (4) den Absperrkörper (7) auf den Ventilsitz drückt.

6. Gasventileinheit nach einem der Ansprüche 1 bis 5, **dadurch gekennzeichnet, dass** zum Öffnen des Auf-Zu-Ventils (4) der Absperrkörper (7) mittels der Kraft eines über dem Auf-Zu-Ventil angeordneten Permanentmagneten (6) entgegen der Kraft der Feder von dem Ventilsitz abhebbar ist.

7. Gasventileinheit nach einem der Ansprüche 1 bis 6, **dadurch gekennzeichnet, dass** die Absperrkörper (7) der einzelnen Auf-Zu-Ventile (4) auf einer Kreisbahn um eine Achse der Gasventileinheit angeordnet sind und die Absperrkörpern (7) parallel zu dieser Achse bewegbar sind, wobei die Achse vorzugsweise von einer Schaltwelle der Gasventileinheit gebildet ist.

8. Gasarmatur mit zumindest einer Gasventileinheit nach einem der Ansprüche 1 bis 7.

9. Gasgerät, insbesondere Gaskochstelle, welches eine Gasarmatur nach Anspruch 8 aufweist.

## Claims

1. Gas valve unit for adjusting a gas volume flow supplied to a gas burner of a gas appliance, in particular a gas hob, wherein the gas valve unit has a number of on-off valves (4) and a single magnetic plate, wherein the number of on-off valves (4) can be connected additively by moving the single magnetic plate relative to the on-off valves (4), wherein a plurality N of on-off valves (4) is provided, wherein each on-off valve (4) has a moveable shut-off element (7), which rests against a valve seat when the on-off valve (4) is closed and as a result closes an opening (8) in the valve seat and wherein the second up to n'th openings have an opening cross-section which increases in sequence.

2. Gas valve unit according to claim 1, **characterised in that** the magnetic plate preferably embodied as a permanent magnet (6) and the on-off valves (4) are embodied such that a certain number of on-off valves are opened as a function of the position of the magnetic plate.

3. Gas valve unit according to claim 2, **characterised in that** as a function of an angle of a rotatable component the permanent magnet (6) is arranged above the on-off valves (5) arranged in sequence.

4. Gas valve unit according to one of claims 1 to 3, **characterised in that** the valve seats of the on-off valves (4) are formed by a shared component, which is preferably formed by a valve sealing plate (9).

5. Gas valve unit according to one of claims 1 to 4, **characterised in that** each on-off valve (4) has a spring (10), which pushes the shut-off element (7) onto the valve seat when the on-off valve (4) is closed.

6. Gas valve unit according to one of claims 1 to 5, **characterised in that** in order to open the on-off valve (4), the shut-off element (7) can be raised against the force of the spring from the valve seat by means of the force of a permanent magnet (6) arranged above the on-off valve.

7. Gas valve unit according to one of claims 1 to 6, **characterised in that** the shut-off elements (7) of the individual on-off valves (4) are arranged on a circular path about an axis of the gas valve unit and the shut-off elements (7) can be moved in parallel to this axis, wherein the axis is preferably formed by a selector shaft of the gas valve unit.

8. Gas fitting having at least one gas valve unit according to one of claims 1 to 7.

9. Gas appliance, in particular gas hotplate, which has a gas fitting according to claim 8.

## Revendications

1. Unité de vannes à gaz pour le réglage d'un débit volumique de gaz fourni à un brûleur à gaz d'un appareil à gaz, en particulier d'une cuisinière à gaz, dans laquelle l'unité de vannes à gaz présente un nombre de vannes d'ouverture/fermeture (4) et un disque magnétique unique, dans laquelle le nombre de vannes d'ouverture/fermeture (4) actionnées croît à mesure du déplacement du disque magnétique unique par rapport aux vannes d'ouverture-fermeture (4), dans laquelle une pluralité N de vannes d'ouverture/fermeture (4) est prévue, chaque vanne d'ouverture/fermeture (4) présentant un corps d'arrêt mobile (7) contigu à un siège de vanne lorsque la vanne d'ouverture/fermeture (4) est fermée et obture ce faisant un orifice (8) dans le siège de vanne et dans laquelle la section de l'orifice croît du deuxième au énième orifice.

2. Unité de vannes à gaz selon la revendication 1, **caractérisée en ce que** le disque magnétique exécuté de préférence sous forme d'aimant permanent (6) et les vannes d'ouverture/fermeture (4) sont exécutés de telle manière qu'un nombre déterminé de vannes d'ouverture/fermeture sont ouvertes en fonction de la position du disque magnétique.

3. Unité de vannes à gaz selon la revendication 2, **caractérisée en ce que** l'aimant permanent (6) est disposé par-dessus les vannes d'ouverture/fermeture (4) disposées en ligne, en fonction d'un angle d'un composant rotatif.

4. Unité de vannes à gaz selon l'une des revendications 1 à 3, **caractérisée en ce que** les sièges de vanne des vannes d'ouverture/fermeture (4) sont constitués par un composant commun, lequel est de préférence constitué par une plaque d'étanchéité pour vanne (9).

5. Unité de vannes à gaz selon l'une des revendications 1 à 4, **caractérisée en ce que** chaque vanne d'ouverture/fermeture (4) présente un ressort (10) qui presse le corps d'arrêt (7) sur le siège de vanne lorsque la vanne d'ouverture/fermeture (4) est fermée.

6. Unité de vannes à gaz selon l'une des revendications 1 à 5, **caractérisée en ce que** pour ouvrir la soupape d'ouverture/fermeture (4), le corps d'arrêt (7) peut être éloigné du siège de vanne contre la force exercée par le ressort au moyen de la force exercée par un aimant permanent (6) disposé par-dessus la vanne d'ouverture/fermeture.

7. Unité de vannes à gaz selon l'une des revendications 1 à 6, **caractérisée en ce que** les corps d'arrêt (7) des diverses vannes d'ouverture/fermeture (4) sont disposés en orbite autour d'un axe de l'unité de vannes à gaz et les corps d'arrêt (7) sont mobiles parallèlement à cet axe, l'axe étant de préférence constitué par un arbre de commande de l'unité de vannes à gaz.

8. Robinetterie à gaz avec au moins une unité de vannes à gaz selon l'une des revendications 1 à 7.

9. Appareil à gaz, en particulier foyer de cuisson à gaz, présentant une robinetterie à gaz selon la revendication 8.
